Europäisches Patentamt

European Patent Office

Office européen des brevets

(19)

(11) Veröffentlichungsnummer: **0 010 750**
A1

(12) ## EUROPÄISCHE PATENTANMELDUNG

(21) Anmeldenummer: 79104176.7

(51) Int. Cl.³: **G 01 N 1/28**

(22) Anmeldetag: **29.10.79**

(30) Priorität: **04.11.78 DE 2847974**

(43) Veröffentlichungstag der Anmeldung: **14.05.80**
Patentblatt 80/10

(84) Benannte Vertragsstaaten: **BE CH DE FR GB NL**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Mück, Karl-Friedrich, Dr., Wittenberger Strasse 17, D-6200 Wiesbaden (DE)**
Erfinder: **Post, Lothar, Berliner Ring 2, D-6233 Kelkheim (Taunus) (DE)**
Erfinder: **Westen, Hannes, Dr., Gustav-Mahler-Strasse 6, D-6200 Wiesbaden (DE)**

(54) **Verfahren und Einbettungssystem zur Einbettung von Gewebsproben.**

(57) Die Erfindung betrifft ein Verfahren und ein Einbettungssystem zur Einbettung von Gewebsproben in Methylmethacrylat, ggf. in Abmischung mit anderen (Meth)acrylaten bei tiefen Temperaturen unter Verwendung eines Tieftemperatur-Initiatorsystems. Dabei ist der weitgehende Erhalt der Enzymaktivität und der Zellmorphologie möglich.

EP 0 010 750 A1

HOECHST AKTIENGESELLSCHAFT    HOE 78/F 240      Dr.ZR/St

0010750

Verfahren und Einbettungssystem zur Einbettung von
Gewebsproben

---

Es ist bekannt, daß sich monomeres Methylmethacrylat
(MMA) zur Einbettung von Gewebsproben für die mikroskopische Zelluntersuchung verwenden läßt; Mikrospie 13
S. 386 (1959). Für die feingewebliche Untersuchung von
Knochenmarksbiopsien von Mensch und Tier bedeutet diese
Einbettung in MMA derzeit die Methode der Wahl, da sich
hierdurch die sonst notwendige vorhergehende Entkalkung
der knöchernen Gewebsbestandteile erübrigt.

Ein wesentlicher Nachteil der derzeit bekannten MMA-
Einbettungsverfahren ist jedoch, daß sich nur eine sehr
beschränkte Anzahl literaturbekannter, enzymhistochemischer
Nachweise an derart präparierten Gewebeproben durchführen
läßt. Hierzu gehören bisher der Aktivitätsnachweis von
$\alpha$-Naphthol-AS-D-chloracetatesterase und saurer Phosphatase.
Ein Grund für die Schwierigkeit, empfindliche Zellenzyme  in MMA-eingebetteten Gewebsproben nachzuweisen,
liegt u.a. in der Tatsache begründet, daß das bisher
geübte Einbettungsverfahren unter Bedingungen abläuft,
bei denen die meisten Enzyme ihre Aktivität verlieren.

Auf Basis von 2-Hydroxyäthylmethacrylat, einem wasserlöslichen Acrylat, ist ein Verfahren zur Gewebseinbettung
für die Enzymhistochemie bekannt geworden (vergl. Beitr.
path. Anat. 147, S. 201 (1972)). Diesem Einbettungsverfahren haften jedoch vor allem die beiden nachfolgenden
Nachteile an:
Zum einen lassen sich die danach erhaltenen Probekörper -
da das Einbettungsmaterial hygroskopisch ist - nur schwierig handhaben und insbesondere schlecht schneiden.  Zum
anderen sind Einbettungsmischungen auf Basis dieser
wasserlöslichen Acrylate beispielsweise für die Knochenmarkshistologie nicht geeignet, da damit bei größeren knochenhaltigen Gewebsproben keine gleichmäßige Polymerisation über den gesamten Querschnitt der Probe zu erreichen ist.

Die Aufgabe der Erfindung bestand daher darin, die Nachteile des Standes der Technik ganz oder zumindestens weitgehend zu beseitigen und insbesondere ein Verfahren zur Einbettung von vorzugsweise knochenhaltigen Gewebsproben bereitzustellen, bei dem sich die Enzymaktivitäten und die Zellmorphologie weitgehend erhalten lassen.

Diese Aufgabe wird erfindungsgemäß dadurch gelöst, daß die Einbettung der Gewebsproben in Polymethacrylat erfolgt, wobei die Polymerisation des MMA, ggf. in Abmischung mit anderen (Meth)acrylaten, in Gegenwart spezieller Initiatoren durchgeführt wird.

Die Erfindung betrifft daher ein Verfahren zur Einbettung von Gewebsproben, insbesondere Gewebe mit knöchernen Anteilen, das dadurch gekennzeichnet ist, daß das einzubettende Gewebe mit Methylmethacrylat, ggf. in Abmischung mit anderen (Meth)acrylaten und/oder eines Weichmachers, bei Temperaturen von höchstens +15°C, vorzugsweise bei +2°C bis -20°C in Gegenwart eines an sich bekannten Tieftemperatur-Initiatorsystems, das neben dem Radikalbildner Beschleuniger enthält, einpolymerisiert wird. Weiterhin betrifft die Erfindung entsprechende Einbettungssysteme gemäß den Ansprüchen 9 bis 11.

Die Tieftemperatur-Initiatorsysteme im Sinne der Erfindung bestehen aus (a) den üblichen Radikalbildnern (Radikalinitiatoren) für die Polymerisation von MMA und (b) einem Beschleuniger (Co-Initiator).

Als Radikalinitiatoren kommen die hierfür bekannten Verbindungen in Frage, beispielsweise Peroxyverbindungen wie

- 3 -

0010750

organische Peroxide und Hydroperoxide oder Perkarbonate. Genannt seien hierzu zum Beispiel Dibenzoylperoxid, Dilaurylperoxid, tert. Butylperpivalat und Diisopropylperkarbonat. Es können auch Gemische derartiger Radikalinitiatoren verwendet werden.

Als Beschleuniger werden erfindungsgemäß die hierfür bebekannten Verbindungen eingesetzt, wie beispielsweise gerad- oder verzweigtkettige, sekundäre oder tertiäre aliphatische Amine, vorzugsweise mit 1-5 C-Atomen, aliphatisch-cycloaliphatische, sekundäre oder tertiäre Amine, aromatisch-aliphatische, sekundäre oder tertiäre Amine.

Von den Aminen sind tertiäre Amine bevorzugt. Beispielhaft seien hierzu genannt:
Triäthylamin, N,N-Dimethylanilin, N,N-Diäthylanilin und N,N-Dimethyl-p-Toluidin. Es liegt selbstverständlich im Rahmen der Erfindung, auch Gemische dieser Beschleuniger einzusetzen.

Zusätzlich zu den genannten Beschleunigern können im Bedarfsfalle, insbesondere bei Einbettungstemperaturen unterhalb von 0°C, auch noch Schwermetallsalze als Beschleuniger eingesetzt werden, vorzugsweise solche, die im Monomeren löslich sind und deren Schwermetallionen einem Valenzwechsel zugänglich ist, wie beispielsweise Kobalt-, Kupfer-, Vanadium- oder Eisensalze. Unter Umständen ist es auch möglich, das Schwermetallsalz anstelle der genannten Beschleuniger einzusetzen.

Besonders vorteilhaft hat es erwiesen, zusätzlich zu dem Beschleuniger sog. Polymerisationsregulatoren zu verwenden, da auf diese Weise ein gleichmäßigerer Polymerisationsverlauf unter Vermeidung von Temperaturspitzen erreicht wird. Außerdem kann dadurch die Menge an Initiatorsystem entsprechend gesenkt werden.

Als derartige Polymerisationsregulatoren kommen beispielsweise organische Phosphorverbindungen und vor allem organische Schwefelverbindungen in Betracht. Zu den ersteren gehören insbesondere aliphatische oder aromatische sekundäre oder tertiäre Phosphine wie etwa Triphenylphosphin. Unter den organischen Schwefelverbindungen sind insbesondere Merkaptane oder Thiophenole, vorzugsweise solche mit geringerer Flüchtigkeit oder Sulfone wie beispielsweise in der DE-PS 916 733 beschrieben, zu nennen. Beispielsweise seien hierzu aufgeführt: Duodecylmerkaptan, Thiophenol und Thiokresol.

Die zusätzlichen Beschleuniger und Polymerisationsregulatoren kommen zweckmäßigerweise in Mengen von 0,05 bis 2 %, vorzugsweise 0,01 bis 1 %, bezogen auf das Polymerengemisch, zum Einsatz.

Weitere Beispiele für erfindungsgemäß einsetzbare Tieftemperatur-Initiatorsysteme sind beispielsweise beschrieben in Houben-Weyl, "Methoden der organischen Chemie", Bd. 14/1 (1961), S. 263 ff und S. 291 ff (Thieme-Verlag, Stuttgart).

Vorzugsweise kommt nach der Erfindung als Tieftemperatur-Initiatorsystem die Kombination von Dibenzoylperoxid mit einem der oben namentlich aufgeführten tertiären Amine, insb. Dimethylanilin, und einem schwefelhaltigen Polymerisationsin Frage.
Die Menge an dem erfindungsgemäßen Initiatorsystem bzw. der Einzelkomponenten hängt von der Art des jeweiligen Initiatorsystems bzw. der Einzelkomponenten, der gewünschten Polymerisationszeit und der Polymerisations(Einbettungs)- temperatur ab, kann aber durch einfache Routineversuche leicht ermittelt werden. So ist - bei gleichem Initiatorsystem - naturgemäß umso mehr davon einzusetzen, je tiefer die Temperatur liegt, um noch eine vertretbare Einbettungszeit zu erhalten. Andererseits wird bei höheren Temperaturen entsprechend weniger an Initiatorsystem zu benutzen sein, um nicht in Gefahr zu laufen, daß aufgrund einer zu schnellen Polymerisation die Temperatur der Probe zu sehr über die Umgebungstemperatur ansteigt und damit eine Schädigung der Enzymaktivität eintritt.

Im allgemeinen beträgt erfindungsgemäß die Menge an Radikalinitiator 0,05 g bis 0,005 g/g Monomer, vorzugsweise 0,035 g bis 0,01 g/g Monomer und die des Beschleunigers 0,1 g bis 0,001 g/g Monomer, vorzugsweise 0,005 g bis 0,001 g/g Monomer.

An und für sich sind die vorstehend angegebenen Bereiche nicht kritisch und können innerhalb bestimmter Grenzen unter-bzw. überschritten werden, wenngleich dann in der Regel gewisse Nachteile in Kauf genommen werden müssen.

So hat - wie erwähnt - die Temperatur einen maßgeblichen Einfluß auf die Grenzbereiche des erfindungsgemäßen Initiatorsystems; falls also gleichzeitig tiefe Temperaturen und kleine Initiatormengen benutzt werden, wird bei Unterschreiten einer bestimmten, leicht zu bestimmenden Menge an Gesamtinitiator bzw. Teilinitiator nur noch eine verzögerte oder unvollständige Polymerisation stattfinden. Dies ist bei Einsatz von Dimethylanilin (DMA) als Co-Initiator und bei einer Temperatur von beispielsweise +2°C bei etwa 0,0048 g DMA/g Monomer der Fall.

Andererseits können zu hohe Mengen an Gesamtinitiator und insbesondere an Co-Initiator zu Diffusionsstörungen im Zentrum der Gewebeproben, u.U. begleitet von Vernetzungserscheinungen im Polymerisat, führen. Dies kann sich störend auf die weitere Verarbeitung der Proben auswirken, z.B. beim Schneiden der Kunststoffblöcke oder beim später evtl. notwendigen Herauslösen des Kunststoffes aus den Gewebsschnitten für die Färbung. In dieser Hinsicht sollte beispielsweise bei Verwendung von DMA und einer Temperatur von beispielsweise +2°C, die Menge an DMA 0,0086 g/g Monomer möglichst nicht überschreiten.

Weiterhin ist bei zu hohen Initiatormengen, wie bereits erwähnt, die Gefahr einer Temperaturschädigung der Probe größer.

Die Temperaturen, bei denen erfindungsgemäß die Einbettung erfolgt, liegen so tief, daß die Enzymaktivität der jeweiligen Gewebsprobe vollständig oder zumindestens weitgehend erhalten bleibt, in der Regel also bei maximal +15°C, vorzugsweise bei +2°C bis -20°C.

Während sich also die Temperaturobergrenze durch die zunehmende Schädigung der Enzymaktivität ergibt, wird die Temperaturuntergrenze durch die bei tiefer Temperatur abfallende Aktivität des erfindungsgemäßen Initiatorsystems und dem daraus resultierenden Anstieg der Polymerisationszeit bestimmt. In den meisten Fällen dürften daher Temperaturen unterhalb von -50°C praktisch kaum zum Einsatz kommen.

Die besagten Temperaturen verstehen sich als die Temperatur des jeweiligen Kühlmediums, z.B. des Eisbades oder des Kühlschrankes. Es ist dabei durch geeignete Polymerisationsführung dafür Sorge zu tragen, daß die Temperatur des Polymerisationsgemisches und der einzubettenden Probe nicht wesentlich über diese Umgebungstemperatur ansteigt. Bei einem entsprechend aktivem Initiatorsystem sind also beispielsweise entsprechend geringere Mengen davon einzusetzen und umgekehrt bzw. die Umgebungstemperatur ist ausreichend tief zu wählen. Gegebenenfalls kann auch durch eine entsprechend intensive Kühlung einem Temperaturanstieg im Einbettungsgemisch entgegengewirkt werden.

Die Temperaturkontrolle im Einbettungsgemisch kann - falls erforderlich - über übliche Temperaturfühler erfolgen.

- 7 -

0010750

Vorzugsweise geschieht dies über eine feine Meßelektrode eines Eisen-Konstantan-Thermoelements (beispielsweise der Firma Degussa), die in ein methanolgefülltes Test-"Tube" (beispielsweise Nr. 39/10 A der Firma Sarstedt) eingetaucht wird. Die in Grad Celsius geeichte Meßspannung des Thermoelements kann vorzugsweise mit einem Linienschreiber (beispielsweise PM 8010 der Firma Philips) aufgezeichnet werden.

Als Einbettungsmedium dient erfindungsgemäß in erster Linie Methacrylsäure-methylester. Gegebenenfalls können jedoch auch Gemische dieses Esters mit anderen Methacrylsäure-Estern und/oder Acrylsäure-Estern mit 2 bis 10, vorzugsweise 2 bis 6 C-Atomen in der Alkoholkomponente zum Einsatz kommen. Beispielsweise seien hier Methacrylsäure-Äthyl- oder -Butylester genannt. Weiterhin möglich ist auch beispielsweise die Abmischung mit Acrylsäure-Äthylester, -Propylester oder -Butylester. Die Acrylsäureester bzw. die entsprechenden Polymeren wirken dabei als Weichmacher auf den Polymethacrylsäure-methylester.

Die vorstehenden Monomeren enthalten üblicherweise die bekannten Stabilisatoren (Polymerisationsinhibitoren), wie p-Hydrochinon, die im Bedarfsfalle nach bekannten Methoden, wie beispielsweise durch Destillation oder durch Säulenchromatographie vor Polymerisationsbeginn entfernt werden können. Im allgemeinen ist dies jedoch nicht erforderlich; vielmehr wird der Stabilisator hier durch eine entsprechend größere Menge an Radikalinitiator kompensiert.

Vorzugsweise enthält das erfindungsgemäße Einbettungsgemisch zusätzlich Füllstoffe mit weichmachender Wirkung (Weichmacher), wie sie beisp. in der Zeitschrift "Blut", Bd. XIII, Heft 6 (Sept. 1966), S. 337 ff, insb. S. 345 und 355 beschrieben sind. Bevorzugst wird erfindungsgemäß für diesen Zweck Nonylphenolpolyglykolätheracetat eingesetzt.
Zur Durchführung des erfindungsgemäßen Einbettungsverfahrens wird die jeweilige Gewebsprobe zunächst in der üblichen Weise vorbehandelt, d.h. beispielsweise fixiert und entwässert, wie etwa beschrieben in der vorstehend zitierten Literaturstelle oder in "Blut", Bd. 32 (1976) S. 215 - 218, sowie in "Beitr. path.Anat.", Bd. 147 (1972) S. 201 - 206.

Danach wird die so vorbehandelte Probe in das erfindungsgemäße, evtl. schon einen der beiden Initiatorkomponenten enthaltene Einbettungsgemisch eingebracht, worauf dann nach Zugabe des Tieftemperaturinitiators bzw. der jeweiligen anderen Initiatorkomponente und ggf. des zusätzlichen Beschleunigers bzw. Polymerisationsregulators die Einpolymerisation erfolgt. Es ist erfindungsgemäß nicht erforderlich, unter Sauerstoffausschluß zu arbeiten, jedoch ist darauf zu achten, daß beim Mischen der verschiedenen Einbettungsbestandteile nicht zu viel an Sauerstoff in das Einbettungsgemisch eingebracht wird, da es ansonsten zu Störungen im Polymerisationsablauf und zur Schädigung des Probekörpers kommen kann.

Die Einbettung erfolgt in einer hierfür üblichen Gießform, beispielsweise einem gläsernen Tablettenröhrchen mit einem Innendurchmesser von beispielsweise 25 mm und Verschlußstopfen.

Die Polymerisationszeit hängt vor allem von dem gewählten, speziellen Initiatorsystem und der Temperatur ab und beträgt im allgemeinen 15 bis 56 Stunden, vorzugsweise 24 bis 48 Stunden. Bei der Einbettung von weichen Gewebeproben liegen diese Zeiten entsprechend tiefer.

Die in Form von Kunststoffblöcken erhaltenen eingebetteten Gewebsproben werden dann in der üblichen Weise geschnitten (Hartschnitt-Technik), evtl. vom polymeren Einbettungsmaterial durch Auflösen desselben in geeigneten Lösungsmitteln wie etwa Ketonen, (Aceton), Chlorkohlenwasserstoffen (Chloroform), Aromaten (Benzol, Toluol) oder Estern (Methylglykolazetat) befreit und angefärbt sowie anschließend nach den bekannten Nachweismethoden auf die verschiedenen Gewebsenzyme (z.B. alkalische Phosphatase) geprüft. Hinsichtlich der hierzu benutzten, bekannten Verfahrensmethodik sei beispielsweise verwiesen auf R. Burkhardt, "Farbatlos der klinischen Histopathologie von Knochenmark und Knochen" (1970), Springer Verlag oder R. Burkhardt in "Blut", Bd. XIII (6), Sept. 1966, S. 338 ff und auf T. BARKA und P.J. ANDERSON: "Histochemistry Theory, Practive und Bibliography", Hoeber Medical Division, Harper & Row, Publishers Inc., New York (1963).

Gemäß einer bevorzugten Ausführungsform des erfindungsgemäßen Verfahrens wird die entsprechend vorbehandelte Gewebsprobe in das den Radikalinitiator und Co-Initiator und ggf. den Polymerisationsregulator enthaltende Einbettungsgemisch gebracht, wobei dieses zuvor auf Temperaturen von unterhalb-10°C, vorzugsweise unterhalb -15°C, beispielsweise -15°C bis -25°C gekühlt wurde. Die Polymerisation erfolgt dann gleichfalls bei diesen Temperaturen und erstreckt sich in der Regel - je nach der speziellen Art des Initiatorsystems - über mehrere Tage. Bei dieser Verfahrensweise findet in den ersten Stunden zunächst praktisch nur eine Durchtränkung der Gewebsprobe statt, da in dieser Phase eine Polymerisation noch nicht in nennenswertem Umfang abläuft. Da diese Verfahrensvariante speziell bei tiefen Temperaturen durchgeführt wird, ermöglicht sie den Einsatz größerer Initiatormengen, was sich günstig auf die Zellmorphologie der Probe auswirkt.

Nach einer weiteren bevorzugten Ausführungsform des erfindungsgemäßen Verfahrens wird die Gewebsprobe zunächst mit dem Einbettungsgemisch behandelt, das nur eine der beiden Initiatorkomponenten, vorzugsweise den Beschleuniger enthält, wobei die Konzentration dieser einen Initiatorkomponente höher, vorzugsweise 2- bis 10-fach und insbesondere 8- bis 10-fach höher, liegt als im eigentlichen, beide Initiatorkomponenten enthaltenden Einbettungsgemisch. Speziell bei Verwendung von DMA als Beschleuniger hat sich ein Konzentrationsbereich von 0,05 bis 0,01 g/g Monomeres im Durchtränkungsgemisch und 0,006 bis 0,009 g/g Monomeres im Einbettungsgemisch als vorteilhaft erwiesen.

Die Durchtränkungstemperatur, Durchtränkungsdauer sowie die Größe der Gewebeproben stehen in engem Zusammenhang, in der Weise, daß tiefere Temperaturen und größere Gewebsstückchen naturgemäß längere Zeiten bedingen und umgekehrt. Grundsätzlich liegt die Durchtränkungstemperatur im gleichen Bereich wie die erfindungsgemäße Einbettungstemperatur, d.h. bei höchstens +15°C. Bevorzugt werden jedoch Temperaturen unterhalb von +5°C, beispielsweise zwischen 0°C und +4°C. Die Durchtränkungszeit liegt in diesem Fall etwa 4 bis 6 Stunden, bei einer Knochenmarksbiopsie-Probe in einer Größe von ca. 4 x 20 mm.

Die eigentliche Polymerisation erfolgt dann ebenfalls etwa in diesem Temperaturbereich, vorzugsweise bei 0 bis +8°C. Diese Variante hat gegenüber der erstgenannten Vorzugsvariante den Vorteil der kürzeren Polymerisations- und damit Einbettungszeit, da hier bei höheren Temperaturen gearbeitet werden kann.

Es ist erfindungsgemäß weiterhin auch möglich, die beiden vorstehenden Vorzugsvarianten zu kombinieren und zwar so, daß zunächst die Durchtränkung in Gegenwart beider Initiatorkomponenten bei tiefen Temperaturen gemäß der ersten Variante durchgeführt wird, dann die Temperatur entsprechend angehoben und gemäß der zweiten Variante weiterverfahren wird. Das anfängliche Durchtränken der Gewebsprobe mit einem relativ hohen Initiatoranteil gemäß den vorstehend beschriebenen Vorzugsvarianten gewährleistet eine besonders gute mikroskopische Zellmorphologie und verhindert weitgehendst das Entstehen von mikroskopischen Schrumpfungsartefakten im Gewebe.

- 11 -                                                    0010750

Das erfindungsgemäße System zur Einbettung von Gewebeproben besteht entsprechend dem Anspruch 9 im wesentlichen
aus den zunächst getrennten Komponenten (a), (b) und (c),
die dann bei der Einbettung in entsprechender Weise zusammengegeben werden. Die Komponente (a) kann dabei gegebenenfalls schon einen Teil oder auch bereits die Gesamtmenge
des Polymerisationsbeschleunigers und/oder Polymerisationsregulators oder weniger bevorzugt, des Radikalbildners enthalten. Falls bereits die Gesamtmenge an Polymerisationsbeschleuniger oder Radikalbildner in der Komponente (a)
enthalten ist, entfällt naturgemäß die Komponente (b) oder
(c).

In einer bevorzugten Ausgestaltungsform ist in der Komponente (a) auch bereits ein Teil oder auch schon die Gesamtmenge des Weichmachers vorhanden, - in Abhängigkeit des
Weichmachers - zumeist 5 bis 30 Gew.-%, bezogen auf die
Monomerenmischung beträgt.

Für die Einbettung von knochenhaltigen Gewebeproben kann
das Einbettungssystem auch aus den Komponenten (a), (a)'
und (b) bestehen, wobei (a) und (a)' bereits den gesamten
Polymerisationsbeschleuniger enthalten, die Teilmenge an
Polymerisationsbeschleuniger in Komponente (a) - mit der
zuerst die Gewebeprobe behandelt wird - jedoch höher, vorzugsweise 2- bis 10-fach höher als in (a)' ist. Auch die
Gesamtmenge an Polymerisationsregulator und vorzugsweise
auch an Weichmacher kann in beliebiger Aufteilung in den
beiden Komponenten (a) und (a)' bereits vorhanden sein.

Die erfindungsgemäße Verfahrensweise gestattet in überraschend einfacher Weise die Herstellung von Gewebseinbettungen, insbesondere von knochenhaltigen Gewebsproben, unter weitgehendem Erhalt der Enzymaktivität und
der Zellmorphologie, was für die enzymhistochemische
Diagnostik von wesentlicher Bedeutung ist. Ungleichmäßige
Polymerisationen über den Querschnitt der einzubettenden Probe und mögliche Polymerisationsstörungen im Zentrum der Gewebsproben sowie Beeinträchtigungen der Zellmorphologie werden insbesondere bei den vorzugsweisen Ausführungsformen des erfindungsgemäßen Verfahrens vermieden.

Als beste Ausführungsform der Erfindung wird derzeit die Verfahrensweise gemäß Beispiel 2, jedoch unter zusätzlicher Verwendung von etwa 0,5 % eines schwefelhaltigen Polymerisationsregulators angesehen.

Die Erfindung wird anhand der nachfolgenden Beispiele erläutert.

Beispiel

Die einzubettenden knochenhaltigen Gewebsproben (Knochenmarksbiopsiezylinder) wurden zunächst fixiert und zwar für die alkalische Phosphatasereaktion für 2 bis 4 Stunden in einem Gemisch bestehend aus zwei Teilen abs. Methanol, einem Teil Formol (37 %ig) und 3 % Glukosephosphatpuffer pH 7,4. Für die Reaktion auf unspezifische Esterase und saure Phosphatase betrug die Fixationszeit 2 bis 6 Std. in 4 % Paraformaldehyd, gelöst in 0,1 M Cacodylatpuffer pH 7,2. Anschließend wurden die Proben innerhalb von 2 Std. durch 6-maligen Wechsel in abs. Methanol entwässert, danach für mindestens 4 Stunden mit dem Durchtränkungsgemisch behandelt und mit dem Einbettungsgemisch in Gießformen (Flachbodengläser, Illex Braunglas der Münnerstädter Glaswarenfabrik Art.-Nr. Wda 1/05 mit einem Innendurchmesser von 25 mm und Verschlußstopfen) auspolymerisiert. Die jeweiligen Einzelheiten sind aus der folgenden Tabelle ersichtlich.

Die erhaltenen eingebetteten Gewerbsproben in Form von Kunststoffblöcken wurden dann mit Hilfe eines handelsüblichen Hartschnittmikrotoms (Rotationsmikrotom Nr. 1140 der Fa. R. Jung, Nußloch) zu Gewebsschnitten aufgearbeitet. Die Prüfung der Schnitte auf ihren morphologischen Gewebszustand erfolgte mikroskopisch nach einer Giemsa-Färbung. Der Nachweis der Enzymaktivitäten wurde ebenfalls mikroskopisch an den zuvor mit Methylglykolazetat vom polymeren Einbettungsmaterial befreiten und auf verschiedene Gewebsenzyme reagierten Schnitten vorgenommen. Positive Enzymaktivitäten wurden hierbei erhalten nach einer Inkubation der Schnitte für 90 Minuten bei 37°C, und zwar für die alkalische Phosphatase (vergl. "Blood" Bd. 10, S. 1023, 1955), saure Phosphatase mit Fast Garnet GBC-Salz (vgl. J. Path. Bact. Bd. 64, S. 627 , 1952) und unspezifische Esterase (vgl. J. Histochem.Cytochem. Bd. 7, S. 297, 1959).

Die Ergebnisse gibt gleichfalls die nachfolgende Tabelle wieder.

Tabelle

| No. | Durchtränkungsgemisch/Temp. (°C) | Zeit (h) | Einbettungsgemisch Temp. (°C) | Temp. max. (°C) | Polymerisationszeit (h) | Bemerkungen |
|---|---|---|---|---|---|---|
| 1 | 10 ml MMA 2,5 ml Pl.N. 0,5 ml DMT /+ 2°C | 4 | 10 ml MMA 2,5 ml Pl.N. 0,01 ml DMT 0,1 g BPO /+2°C | +3°C nach 6 Std. | ca. 17 | homogen eingebettete Proben, schneidbar, Enzymaktivität nachweisbar und lokalisierbar |
| 2 | wie in Beisp. 1, jedoch 0,5 ml DMA /+ 2°C | 4 | wie in Beisp.1, jedoch 0,06 ml DMA 0,1 g BPO | + 3°C 21 Std. | ca. 30 | -"- |
| 3 | wie in Beisp 1, jedoch 0,15 ml DMA 0,1 g BPO /-20°C | | wie in Beisp.1, jedoch 0,15 ml DMA 0,1 g BPO /-20°C | -16°C nach 11 Std. | ca. 30 | - " - |
| 4 | wie in Beisp 1, jedoch 0,05 DMT 0,1 g BPO /-20°C | | wie in Beisp.1, jedoch 0,05 DMT 0,1 g BPO | -12°C nach 11 Std. | ca. 30 | -"- |
| Vgl. Beisp.1 | wie in Beisp. 1, jedoch 0,05 ml DMA /+2°C | 4 | wie in Beisp.1, jedoch 0,05 ml DMA + 0,1 g BPO | +3°C | ca. 30 | homogen eingebettete Probe;aber stark veränderte Zellmorphologie |
| Vergl. 2 | wie in Beisp. 1, jedoch 0,8 DMT /+2°C | 4 | wie in Beisp.1, jedoch 0,01 DMT 0,1 BPO | | 5 | nicht homogen eingebettete Probe; Polymerisat unlöslich |
| Vergl. 3 | wie in Beisp. 1,jedoch 0,35 g BPO /+ 34°C | 4 | wie Durchtränkung | 50°C /34°C | 24 | homogen eingebettete Probe, schneidbar; Enzymaktivität nicht ausreichend erhalten |

Pl.N. = Nonylphenol-polyglycolätherazetat

DMA = N,N-Dimethylanilin

DMT = N,N-Dimethyl-p-Toluidin

BPO = Dibenzoylperoxid

0010750

## PATENTANSPRÜCHE

1. Verfahren zur Einbettung von Gewebsproben, dadurch gekennzeichnet, daß das einzubettende Gewebe in Methylmethacrylat, ggf. in Abmischung mit anderen (Meth)-acrylaten und/oder einem Weichmacher, bei Temperaturen von höchstens +15°C in Gegenwart eines Tieftemperatur-Initiatorsystems, das neben dem Radikalbildner Beschleuniger enthält, einpolymerisiert wird.

2. Verfahren nach Anspruch 1, dadurch gekennzeichnet, daß als Beschleuniger tertiäre aliphatische und/oder aromatisch-aliphatische Amine und/oder Schwermetallsalze eingesetzt werden.

3. Verfahren nach Anspruch 1 und 2, dadurch gekennzeichnet, daß die Temperatur +2°C bis -20°C beträgt.

4. Verfahren nach Anspruch 1 bis 3, dadurch gekennzeichnet, daß die Gewebsprobe vor dem Einbringen in das Polymerisationsgemisch mit einem Gemisch aus Monomeren, Beschleunigern und/oder Radikalbildner behandelt wird, wobei die Konzentration an Beschleuniger und/oder Radikalbildner höher als in dem Polymerisationsgemisch ist.

5. Verfahren nach Anspruch 4, dadurch gekennzeichnet, daß die Konzentration an Beschleuniger und/oder Radikalbildner 2- bis 10-fach höher ist.

6. Verfahren nach Anspruch 1 bis 5, dadurch gekennzeichnet, daß als Weichmacher Nonylphenolpolyglykolätherazetat eingesetzt wird.

7. Verfahren nach Anspruch 1 bis 6, dadurch gekennzeichnet, daß das Tieftemperatur-Initiationssystem zusätzlich einen Pomymerisationsregulator enthält.

8. Verfahren nach Anspruch 7, dadurch gekennzeichnet, daß als Polymerisationsregulator organische Schwefelverbindungen eingesetzt werden.

9. System zur Einbettung von Gewebsproben, bestehend aus den zunächst getrennten Komponenten

(a) Methylmethacrylat, ggf. zusammen mit anderen (Meth)acrylaten und/oder Polymerisationsinhibitoren und ggf. in Abmischung mit dem Polymerisationsbeschleuniger oder dem Radikalbildner,

(b) dem Radikalbildner,

(c) dem Polymerisationsbeschleuniger wobei die Komponenten (a) und/oder (b) und/oder (c) zusätzlich noch Weichmacher und die Komponenten (a) und/oder (c) zusätzlich noch Schwermetallsalze oder Polymerisationsregulatoren enthalten können.

10. Einbettungssystem nach Anspruch 9, dadurch gekennzeichnet, daß es als Beschleuniger tertiäre aliphatische und/oder aromatisch-aliphatische Amine und/oder Schwermetallsalze enthält.

11. Einbettungssystem nach Anspruch 9 und 10, dadurch gekennzeichnet, daß es als Weichmacher Nonylphenolpolyglykolätherazetat enthält.

**Europäisches Patentamt**

**EUROPÄISCHER RECHERCHENBERICHT**

0010750

Nummer der Anmeldung

EP 79 10 4176

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| X | CHEMICAL ABSTRACTS, Vol. 77, Nr. 5, 31. Juli 1972, Zusammenfassung Nr. 31131n, Seite 236, Spalte 2, Columbus, Ohio, USA, M. FRANCESCO: "Embedding of plant tissues in liposolüble methacrylate polymers for light microscopy" & Ann.Fac.Agr.Univ.Bari 1969, 23, 239-55 * Zusammenfassung * | 1-11 |
| | DE - A - 2 748 938 (KULZER & CO) * Ansprüche 1,4,7; Seite 6, Zeilen 22-26 * | 1-11 |
| X | DE - C - 886 822 (DEUTSCHE GOLD- UND SILBER-SCHEIDEANSTALT) * Anspruch 1; Seite 2, Zeilen 4-21 * | 1-11 |

**KLASSIFIKATION DER ANMELDUNG (Int.Cl. 3)**

G 01 N 1/28

**RECHERCHIERTE SACHGEBIETE (Int. Cl. 3)**

G 01 N 1/28

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-01-1980 | LEHERTE |

EPA form 1503.1  06.78